(19) Europäisches Patentamt
European Patent Office
Office européen des brevets

(11) **EP 3 391 622 B1**

(12) **FASCICULE DE BREVET EUROPEEN**

(45) Date de publication et mention de la délivrance du brevet:
**16.12.2020 Bulletin 2020/51**

(21) Numéro de dépôt: **16825539.6**

(22) Date de dépôt: **16.12.2016**

(51) Int Cl.:
*H04L 29/08* (2006.01)    *H04W 4/02* (2018.01)
*H04H 20/26* (2008.01)    *H04H 20/20* (2008.01)
*H04H 20/22* (2008.01)    *H04H 60/85* (2008.01)
*H04L 29/06* (2006.01)    *H04H 20/24* (2008.01)
*H04H 60/41* (2008.01)    *H04H 60/51* (2008.01)
*H04W 48/16* (2009.01)    *H04W 4/021* (2018.01)
*H04W 48/14* (2009.01)

(86) Numéro de dépôt international:
**PCT/FR2016/053526**

(87) Numéro de publication internationale:
**WO 2017/103538 (22.06.2017 Gazette 2017/25)**

(54) **PARAMÉTRAGE GÉOLOCALISÉ POUR LA DIFFUSION D'UN CONTENU MULTIMÉDIA**

GEOLOKALISIERUNGSBASIERTE PARAMETRIERUNG FÜR DIE AUSSTRAHLUNG VON MULTIMEDIAINHALT

GEOLOCATION-BASED PARAMETERISATION FOR THE BROADCASTING OF MULTIMEDIA CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562813**

(43) Date de publication de la demande:
**24.10.2018 Bulletin 2018/43**

(73) Titulaire: **TDF**
**92120 Montrouge (FR)**

(72) Inventeurs:
• **VINCENT, David**
  **35150 Amanlis (FR)**
• **FAGUE, Dimitri**
  **75010 Paris (FR)**
• **CANNIEUX, Laurent**
  **35150 Corps-Nuds (FR)**

(74) Mandataire: **Plasseraud IP**
**66, rue de la Chaussée d'Antin**
**75440 Paris Cedex 09 (FR)**

(56) Documents cités:
**US-A1- 2012 040 605    US-A1- 2012 040 605**
**US-A1- 2012 040 605    US-A1- 2015 288 990**
**US-A1- 2015 288 990    US-B1- 6 920 327**
**US-B1- 6 920 327**

# Description

La présente invention appartient au domaine de la diffusion de contenus multimédia. Elle concerne en particulier un procédé apte à informer un terminal sur la disponibilité d'au moins un réseau apte à diffuser un contenu multimédia à l'endroit où est localisé le terminal.

Cette méthode est particulièrement avantageuse pour la diffusion par un terminal mobile d'un flux audio proposé par une station de radio.

On entend par « contenu multimédia », tout type de contenu comprenant au moins un média. Typiquement, un contenu multimédia comprend au moins un élément parmi des données vidéo, des données d'image, des données audio, des données de texte, un fichier vidéo, un fichier audio, un flux audio, un flux vidéo, le flux audio d'une station de radio, le flux vidéo d'une chaîne de télévision, une image, des données de mouvement, etc.

On entend par « terminal », tout type de dispositif constituant une terminaison de tout type de réseau. Un autoradio, un téléphone portable, un ordinateur de bureau, une tablette tactile, un objet connecté ou encore un distributeur automatique de billets sont des exemples de terminaux.

On entend par « réseau », l'ensemble des canaux et des nœuds constituant un réseau de communication. Un exemple de réseau est un réseau de radiodiffusion en modulation de fréquence, FM (ci-après « réseau radio FM »), un réseau de radiodiffusion en modulation d'amplitude, AM (ci-après « réseau radio AM »), un réseau de radiodiffusion sonore numérique, DAB, un réseau de radiodiffusion de type digital radio mondiale, DRM, un réseau de radiodiffusion de type télévision numérique terrestre, TNT, un réseau cellulaire de radiotéléphonie (2G/3G/4G), un réseau sans-fil de type Wi-Fi, un réseau sans-fil de type Bluetooth, MARQUE DEPOSEE, un réseau filaire de type Ethernet, un réseau optique comprenant au moins une fibre optique, etc.

Les réseaux aptes à diffuser des contenus multimédia, tels que le réseau FM pour la radio où le réseau 4G pour la TV en streaming, sont inégalement disponibles sur un territoire. Les agglomérations importantes sont ainsi généralement bien couvertes et les habitants de ces agglomérations ont accès à un grand nombre de contenus multimédia, via un grand nombre de réseaux. Par contre, les zones de faible densité comme la montagne ou la campagne sont moins bien couvertes.

Ainsi, lorsqu'un utilisateur d'un terminal se déplace dans une nouvelle zone géographique du territoire et qu'il souhaite accéder à un contenu multimédia, il doit parcourir l'ensemble des contenus pour chaque réseau accessible depuis son terminal. Typiquement, l'utilisateur d'un smartphone qui souhaite écouter la radio devra, une fois arrivé dans une nouvelle zone géographique, utiliser son application radio FM/AM et parcourir les différentes radio disponible via la FM, puis via la AM, puis utiliser une application de streaming de web-radio (radio accessible via internet) en parcourant à nouveau l'ensemble des radio disponibles. Ces opérations sont longues et fastidieuses pour l'utilisateur.

En outre, lorsque l'utilisateur se déplace d'une première zone géographique vers une deuxième zone géographique tout en profitant d'un contenu multimédia, il est possible que le contenu multimédia ne soit plus accessible, par exemple parce que le réseau utilisé pour transmettre le contenu n'est plus disponible. Par exemple, une station radio reçue par un récepteur FM peut ne plus être accessible dans la deuxième zone géographique via la FM mais peut continuer à être accessible par exemple via une connexion 4G. Dans cette situation, l'utilisateur ne peut plus bénéficier du contenu lorsqu'il rentre dans la deuxième zone géographique et doit chercher d'autres réseaux susceptibles de transmettre ce contenu.

Il existe donc un besoin d'améliorer la simplicité et la continuité de l'accessibilité à un contenu multimédia lorsqu'un utilisateur se déplace d'une zone géographique à une autre. Diverses méthodes ont pu être proposées pour répondre à ce besoin.

Une première méthode repose sur scan automatique et en continu des réseaux de radiodiffusion disponibles. Les récepteurs scannent en continu les réseaux de radiodiffusion, tels que FM, AM, DAB, DRM, à la recherche d'une modification de la liste des stations de radio disponibles. On utilise ci-après indifféremment les termes « station de radio » et « radio ». Ainsi, le terminal peut détecter de manière autonome qu'un réseau n'est plus disponible pour une radio spécifique et peut ainsi chercher à basculer automatiquement sur un autre réseau disponible pour cette même radio.

Cette méthode améliore donc la continuité de l'accessibilité aux contenus multimédia lors d'un changement de couverture réseau. Elle reste toutefois complexe à mettre en œuvre dans la mesure où elle n'est pas compatible avec les réseaux reliés à internet (streaming radio/télévision). Ainsi, l'utilisateur n'ayant plus accès au contenu souhaité via un réseau de radiodiffusion devra basculer manuellement vers d'autres réseaux (streaming typiquement) pouvant proposer ce contenu. En outre, cette méthode impose de prévoir un tuner supplémentaire pour effectuer le scan et requiert un délai d'acquisition important lors du démarrage du terminal.

Une deuxième méthode, appelée suivi de programme, consiste à analyser les informations présentes dans le contenu multimédia diffusé pour basculer automatiquement d'un premier réseau vers un deuxième réseau lorsque le contenu n'est plus accessible à partir du premier réseau.

Les inconvénients de la première méthode se retrouvent toutefois également pour cette deuxième méthode. En effet, cette méthode ne fonctionne que pour les réseaux de radiodiffusion, et n'est donc pas compatible avec les réseaux proposant des contenus de streaming, notamment. En outre, cette méthode ne permet pas d'obtenir la liste des services disponibles à la localisation du terminal. Enfin, elle impose d'effectuer une analyse contextuelle du contenu multimédia, cette analyse imposant une charge importante de calcul.

Des méthodes de traitement sont également décrites dans les demandes US 2012/040605 A1 et US 2015/288990 A1 pour déterminer des réseaux disponibles pour un terminal dans une zone géographique.

Ainsi, les méthodes actuellement proposées n'améliorent la transition d'une zone géographique à une autre qu'au prix de dispositifs couteux (deux tuners ou charge de calcul supplémentaire à prévoir) et complexes à mettre en œuvre. En outre, ces méthodes ne rendent pas plus facile l'accès aux contenus multimédia lors d'un changement de zone géographique. En particulier, le fait que ces méthodes ne soient pas compatibles entre les différents réseaux d'accès aux contenus est problématique.

La présente invention vient améliorer la situation.

A cet effet, un premier aspect de l'invention concerne un procédé de traitement selon la revendication indépendante 1.

On entend par « endroit où est localisé » et « localisation du terminal », l'endroit dans lequel le terminal est physiquement ou virtuellement situé. En effet, l'invention est également directement applicable au cas où le terminal se localise à un endroit donné alors qu'il est physiquement situé à une autre localisation. Dans ce cas l'information de localisation du terminal correspond à la localisation virtuelle, souhaitée par le terminal et/ou l'utilisateur du terminal, et non à la localisation physique du terminal.

On entend par « pluralité prédéterminée de réseaux apte à diffuser le contenu multimédia », l'ensemble des réseaux théoriquement disponibles pour diffuser le contenu multimédia sur un territoire donné, certains des réseaux de la pluralité prédéterminée étant indisponibles sur certaines zones géographiques du territoire. Dans un mode de réalisation, la pluralité prédéterminée de réseau est prédéterminée en fonction du contenu multimédia.

Par exemple, la radio France Inter peut théoriquement être diffusée en France par un réseau FM, AM, DAB, DRM, Wi-Fi/4G en streaming, etc. Toutefois, ces réseaux ne sont en pratique pas disponibles partout en France. Ainsi, seuls les réseaux FM et AM de la pluralité prédéterminée peuvent être disponibles pour diffuser France Inter dans des vallées reculées des Pyrénées où le réseau 3G/4G n'est pas disponible.

La connaissance par le terminal des réseaux disponibles pour diffuser le contenu multimédia, à l'endroit où est situé le terminal, améliore d'une part la gestion de la transition d'une zone géographique à une autre et facilite d'autre part l'accès aux contenus multimédia pour l'utilisateur.

En effet, lorsque le terminal passe d'une première zone géographique où un premier réseau diffuse un contenu multimédia à une deuxième zone géographique où le premier réseau n'est plus disponible, un simple échange avec le système informe le terminal des réseaux alternatifs pouvant diffuser le contenu multimédia dans la deuxième zone géographique. Le terminal peut ainsi se connecter de manière autonome à l'un de ces réseaux alternatifs. La transition s'effectue donc de manière fluide et quel que soit le type de réseau concerné.

En outre, le procédé selon l'invention n'est pas techniquement limité à certains réseaux. En effet, le stockage des indicateurs de disponibilité n'est pas restreint à certains réseaux. Comme cela est détaillé ci-après, les données relatives au réseau disponible détecté peuvent sans difficultés être adaptées à tout type de réseau. L'utilisateur dispose donc d'une liste exhaustive des réseaux lui permettant d'accéder à un contenu multimédia à l'endroit où il se situe.

De plus, lorsqu'un terminal est allumé ou sort d'un mode hors connexion (mode avion typiquement), il s'écoule généralement plusieurs secondes, voire parfois plusieurs minutes, avant que le terminal connaisse les réseaux auxquels il a accès. Dans cette situation, l'échange avec le système peut être effectué dès l'allumage et les données reçues peuvent rapidement informer le terminal sur les réseaux auxquels il a accès.

Dans un mode de réalisation, le procédé comporte en outre les étapes de :

- mesure par le terminal d'au moins un indicateur de qualité d'au moins un réseau parmi la pluralité prédéterminée de réseaux ;
- transmission dudit indicateur de qualité du terminal vers le système ;
- stockage dudit indicateur de qualité dans le système.

Les informations sur la qualité de réseaux remontées par une pluralité de terminaux, sur un territoire, permet de cartographier la qualité des réseaux présents sur ce territoire. L'obtention d'une telle cartographie se fait sans qu'il soit nécessaire de prévoir d'équipements d'acquisition de mesures dédiés. En outre, la présence de nombreux terminaux en permanence sur le territoire garantit la fraicheur des mesures remontées au système.

En particulier, l'étape de mesure de l'indicateur de qualité peut être effectuée avant l'étape de réception par le système de la requête d'information sur la disponibilité du contenu multimédia. La transmission de l'indicateur de qualité est alors faite avec la transmission de la requête d'information sur la disponibilité du contenu multimédia, en intégrant l'indicateur de qualité dans la requête d'information sur la disponibilité du contenu multimédia. Ainsi, l'occupation des canaux de communication entre le terminal et le système est réduite au minimum.

En outre, le système comprenant la base de données peut stocker, pour chaque zone géographique parmi une pluralité de zones géographiques, une liste comprenant des indicateurs de qualité respectifs des réseaux de la pluralité prédéterminée de réseaux dans ladite zone géographique. Le procédé comporte alors en outre les étapes de :

- association de l'indicateur de qualité avec l'information de localisation du terminal pour déterminer la zone géographique parmi la pluralité de zones géographiques dans laquelle l'indicateur de qualité a été mesurée ;

- stockage dans le système de l'indicateur de qualité pour la zone géographique déterminée.

Les mesures de qualités sont ainsi regroupées par zones géographiques. Elles sont donc aisément transférables à partir d'une requête comprenant une information de localisation d'un terminal.

Dans un mode de réalisation, l'indicateur de qualité du réseau mesuré comprend au moins un élément parmi :

- un indicateur de disponibilité dudit réseau mesuré ;

- un retard lié à la transmission, via le réseau mesuré, de données de diffusion du contenu multimédia ;

- un rapport de signal sur bruit lié à la transmission, via le réseau mesuré, de données de diffusion du contenu multimédia ;

- une puissance d'un signal lié à la transmission, via le réseau mesuré, de données de diffusion du contenu multimédia ;

- un taux erreur binaire d'un signal lié à la transmission, via le réseau mesuré, de données de diffusion du contenu multimédia.

La mesure de retard rend plus précis le dimensionnement des tampons de lecture, « buffers » en anglais. Le rapport signal sur bruit peut lui être utilisé par les algorithmes de correction d'erreur ou, plus généralement, de traitement des signaux pour améliorer la qualité du contenu multimédia perçue par l'utilisateur. La mesure de puissance peut être utilisée pour dimensionner les systèmes physiques (antennes, démultiplexeurs, etc.) de réception des signaux.

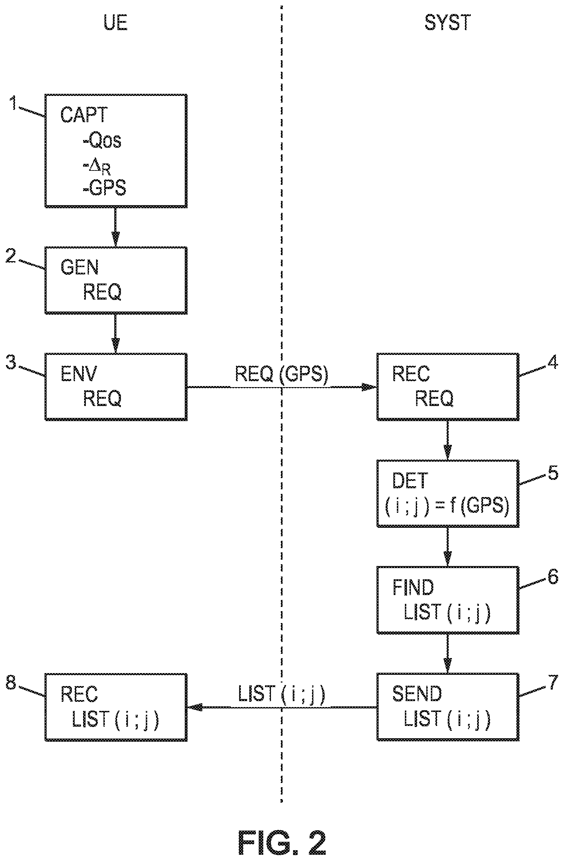

Un indicateur de retard inter-réseaux est précieux pour le système et pour les terminaux qui émettront des requêtes à destination du système. En effet, l'indicateur de retard inter-réseaux rend possible un passage fluide et sans discontinuité d'un premier réseau vers un deuxième réseau, notamment dans le cas où un même contenu multimédia n'est plus accessible par le premier réseau et que le terminal doit passer sur le deuxième réseau. L'explication de l'utilisation et des avantages liés à l'utilisation de l'indicateur inter-réseaux est détaillée ci-après en référence à la figure 2.

Dans un mode de réalisation, l'étape de mesure de l'indicateur de retard inter-réseaux ne peut être effectuée après réception par le terminal des données relatives à la pluralité de réseaux détectés que si le premier et le deuxième réseau ont été détectés dans la base de données comme étant disponibles dans la zone géographique du terminal. Ainsi, le terminal n'effectue pas de mesures inutiles, pour des réseaux qui ne sont de toutes façons pas disponibles.

Dans un mode de réalisation, les données relatives audit réseau disponible comprennent un élément parmi :

- un identifiant dudit réseau disponible ;
- un identifiant d'un contenu multimédia disponible ;
- un indicateur de disponibilité dudit réseau disponible ;
- un indicateur de qualité dudit réseau disponible ;
- dans le cas où au moins deux réseaux sont disponibles dans la zone géographique du terminal, une valeur de retard dans la diffusion du contenu multimédia entre un premier réseau disponible et un deuxième réseau disponible.

Dans un autre mode de réalisation, le contenu multimédia comprend au moins un élément parmi :

- un flux audio ;
- un flux video ;
- un fichier audio ;
- un fichier video ;
- au moins une image.

Dans un mode de réalisation, la pluralité prédéterminée de réseau comprend au moins deux réseaux parmi :

- un réseau de radiodiffusion en modulation de fréquence, FM ;
- un réseau de radiodiffusion en modulation d'amplitude, AM ;
- un réseau de radiodiffusion sonore numérique, DAB ;
- un réseau de radiodiffusion de type digital radio mondiale, DRM ;
- un réseau de radiodiffusion de type télévision numérique terrestre, TNT
- un réseau cellulaire de radiotéléphonie ;
- un réseau sans-fil de type Wi-Fi.

Dans un autre mode de réalisation, la pluralité prédéterminée de réseau est prédéterminée en fonction du contenu multimédia.

Un deuxième aspect de l'invention concerne un système de traitement selon la revendication indépendante 7.

Dans un mode de réalisation du deuxième aspect de l'invention, le système comprend en outre un module de stockage, pour chaque zone géographique parmi une pluralité de zones géographiques, d'une liste comprenant des indicateurs de qualité respectifs des réseaux de la pluralité prédéterminée de réseaux dans ladite zone géographique. Ledit module de stockage peut être intégré ou non à la base de données. S'il n'est pas intégré à la base de données, les interactions avec les terminaux sont plus simples car le module de stockage est plus léger et plus facile à manipuler que la base de données. Toutefois, dans ce cas, le rassemblement des indicateurs de qualités avec les indicateurs de disponibilité est plus complexe à mettre en œuvre.

Un troisième aspect de l'invention concerne un terminal selon la revendication indépendante 9.

D'autres caractéristiques et avantages de l'invention apparaîtront à l'examen de la description détaillée ci-après, et des dessins annexés sur lesquels:

- la figure 1 illustre un contexte de mise en œuvre d'un procédé de traitement, relatif à la transmission d'information à un terminal sur la disponibilité d'au moins un réseau apte à diffuser un contenu multimédia à l'endroit où est localisé le terminal, selon un mode de réalisation de l'invention ;

- la figure 2 est un diagramme illustrant les étapes d'un procédé de traitement, relatif à la transmission d'information à un terminal sur la disponibilité d'au moins un réseau apte à diffuser un contenu multimédia à l'endroit où est localisé le terminal, selon un mode de réalisation de l'invention ;

- la figure 3 est un schéma illustrant le système comprenant la base de données, selon un mode de réalisation de l'invention ;

- la figure 4 est un diagramme illustrant les étapes d'un procédé de mise à jour de la base de données, selon un mode de réalisation de l'invention ;

- la figure 5 illustre un contexte technique de mise en œuvre d'un procédé de traitement, relatif à la gestion de la charge, selon un mode de réalisation de l'invention ;

- la figure 6A est un diagramme illustrant les étapes d'un procédé de traitement, relatif à la gestion de la charge, selon un mode de réalisation de l'invention ;

- la figure 6B est un schéma illustrant la gestion des requêtes par le système, selon un mode de réalisation de l'invention ;

- la figure 7 illustre un microcontrôleur, selon un mode de réalisation de l'invention.

L'invention est décrite ci-après dans son application, non limitative, à la diffusion d'un contenu multimédia de type flux audio, et plus particulièrement à la diffusion de stations de radio. D'autres applications telles que la diffusion d'un flux vidéo, comme la TNT, ou la diffusion d'un contenu vidéo ponctuel, comme le téléchargement d'un film, sont également envisageables.

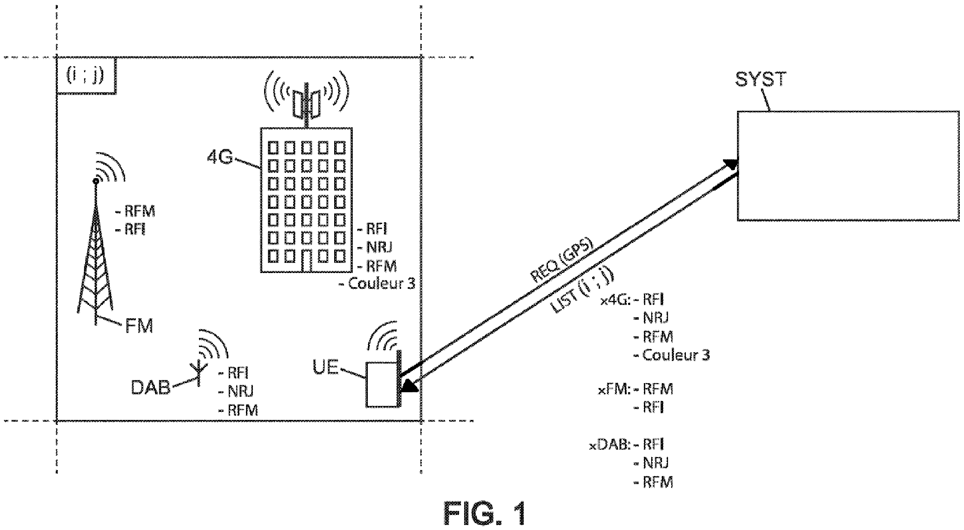

Le procédé et les dispositifs de transmission d'information à un terminal sur la disponibilité d'au moins un réseau apte à diffuser un contenu multimédia à l'endroit où est localisé le terminal sont plus particulièrement décrits aux figures 1 à 4.

La **figure 1** illustre un contexte d'utilisation de l'invention, selon un mode de réalisation. Le terminal UE est situé dans une zone géographique, ici référencée (i ; j), comprise dans un territoire plus vaste. Par exemple, le territoire français peut-être découpé en zones géographiques carrées pour former une matrice de I lignes et J colonnes. D'autres formes et répartition du territoire en zones géographiques sont possibles, il est ainsi possible de séparer le territoire en zones et sous-zones, de prévoir des zones rectangulaires ou hexagonales, de ne pas prendre en compte certaines zones du territoire, etc. Dans la suite de la description, l'exemple du territoire français sera pris.

On suppose que le terminal est ici situé dans une zone géographique (i ; j), avec $i \in [\![1; I]\!]$ et $j \in [\![1; J]\!]$. Dans cette zone géographique, on suppose en outre que trois réseaux, un de radiodiffusion en modulation de fréquence FM, un réseau cellulaire de radiotéléphonie 4G et un réseau de radiodiffusion sonore numérique DAB sont présents. On suppose également que le réseau FM est ici apte à diffuser les stations radio françaises RFM, MARQUE DEPOSEE, et RFI, MARQUE DEPOSEE, le réseau DAB est ici apte à diffuser les stations radio françaises RFI, NRJ, MARQUE DEPOSEE, et RFM et le réseau 4G est ici apte à diffuser les stations radio françaises RFI, NRJ, RFM et la radio suisse Couleur 3, MARQUE DEPOSEE.

Le terminal UE peut en outre communiquer avec un système SYST. Les échanges avec le système SYST peuvent être assurés par tout type de canal de communication, par exemple par n'importe lequel des réseaux disponibles dans la zone (i ; j) ou par un réseau prédéterminé tel que le réseau 4G.

Comme cela est détaillé ci-après en référence à la figure 2, le terminal UE envoie une requête REQ d'information sur la disponibilité du contenu multimédia comprenant une information de localisation (GPS) du terminal. La requête est alors traitée par le système (voir ci-après les explications données en référence à la figure 2) et le système retourne des données LIST relatives aux réseaux disponibles détectés pour la zone (i ; j). Ces données comprennent typiquement la liste des réseaux disponibles, soit ici :

- 4G: RFI, NRJ, RFM, Couleur 3 ;
- FM : RFM, RFI ;
- DAB : RFI, NRJ, RFM.

Un procédé de traitement selon un mode de réalisation de l'invention est maintenant décrit en référence à la **figure 2.**

Le procédé peut être mis en œuvre dans différentes situations. Il a pour objet de faciliter et de fluidifier l'accès par l'utilisateur d'un terminal à un contenu multimédia (ici la radio) accessible par différents réseaux. Ainsi, l'utilisateur peut être dans la situation où il se déplace pour arriver dans la zone géographique (i ; j), typiquement quand l'utilisateur sollicite (déverrouillage ou allumage) son smartphone à la suite ou pendant un déplacement en train à grande vitesse.

La configuration du terminal est alors inadaptée aux réseaux disponibles dans la nouvelle zone géographique (i ; j). En effet, le terminal est configuré pour fonctionner sur les réseaux présents dans la zone géographique dans laquelle il était préalablement situé. Dans la situation où l'utilisateur écoute une radio et que le terminal change de zone géographique, la diffusion de la radio peut-être interrompue car le terminal doit changer de configuration pour s'adapter aux réseaux présents dans la nouvelle zone géographique (i ; j).

En outre, l'utilisateur ne connait pas les différentes stations accessibles dans la nouvelle zone géographique (i ; j). En effet, certains réseaux (typiquement le réseau FM) ne proposent pas les mêmes radios dans toutes les zones géographiques du territoire.

Pour résoudre ces problèmes, le procédé selon un mode de réalisation de l'invention comprend les étapes suivantes.

A une première étape 1, le terminal se géolocalise. Pour ce faire, il peut déterminer sa position (latitude et longitude par exemple) au moyen d'un GPS, pour système de position global, ou de tout autre dispositif de géolocalisation. Une information de localisation du terminal, référencée GPS, est obtenue par cette étape de géolocalisation.

Optionnellement, le terminal peut aussi mesurer lors de cette première étape 1 un indicateur de qualité QoS d'un réseau présent dans la zone géographique (i ; j). Ledit réseau présent peut être détecté par le terminal par une étape préliminaire. Alternativement, une liste prédéterminée de réseaux à mesurer peut-être stockée sur le terminal. Les réseaux à mesurer peuvent également être déterminés à partir des données LIST obtenues par le présent procédé pour une zone géographique où le terminal était préalablement situé.

L'indicateur de qualité peut être un indicateur de disponibilité du réseau mesuré, un retard lié à la transmission, un rapport de signal sur bruit lié à la transmission, une puissance d'un signal lié à la transmission, une valeur de bruit du signal, un indicateur du nombre de canaux multiplexés sur un même signal analogique, une présence de métadonnées sur le signal, etc.

Egalement de manière optionnelle, le terminal peut mesurer lors de cette première étape 1 un indicateur de retard inter-réseaux $\Delta_R$. L'indicateur de retard inter-réseaux comprend une valeur de retard dans la diffusion d'une radio entre un premier réseau et un deuxième réseau présents dans la zone géographique (i ; j). De même que pour l'indicateur de qualité QoS, lesdits premiers et deuxième réseaux présents peuvent être détectés par le terminal par une étape préliminaire, stockés sur le terminal ou encore déterminés à partir des données LIST obtenues par le présent procédé pour une zone géographique où le terminal était préalablement situé. Le nombre d'indicateurs inter-réseaux peut alors être égal à (a -1) avec a le nombre de réseaux présents dans la zone géographique.

Dans un autre mode de réalisation, les étapes optionnelles de mesure de l'indicateur de qualité QoS et/ou de l'indicateur de retard inter-réseaux $\Delta_R$ peuvent être effectuées après les étapes (décrites ci-après en référence aux étapes 2 à 8) de transmission au terminal des données relatives aux réseaux détectés comme disponibles dans la zone géographique (i ; j) par le système SYST.

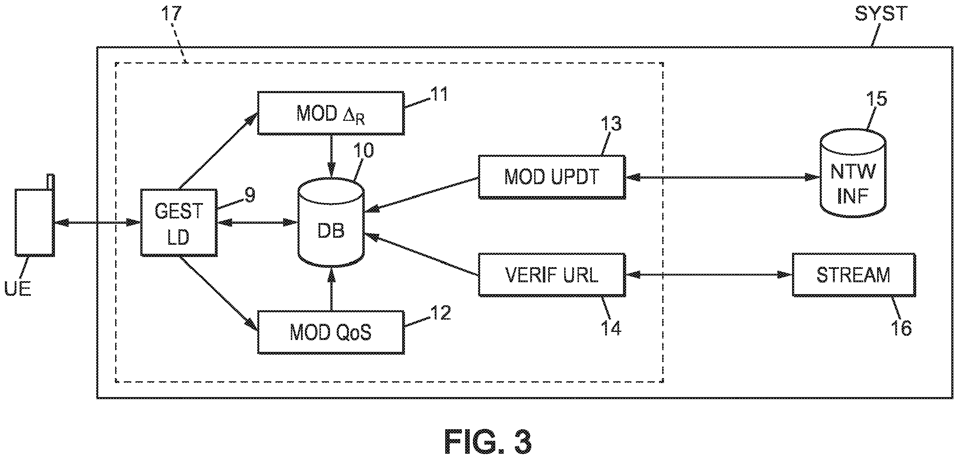

Une requête REQ est ensuite générée à l'étape 2, cette requête comprend au moins l'information de localisation, référencée GPS, du terminal acquise à l'étape 1. La requête REQ peut également comprendre le au moins un indicateur de qualité QoS et/ou le au moins un indicateur de retard inter-réseaux $\Delta_R$. Cette requête est ensuite transmise au système SYST aux étapes 3 et 4. L'architecture et le fonctionnement détaillé du système SYST sont décrits ci-après en référence aux figures 3 à 7.

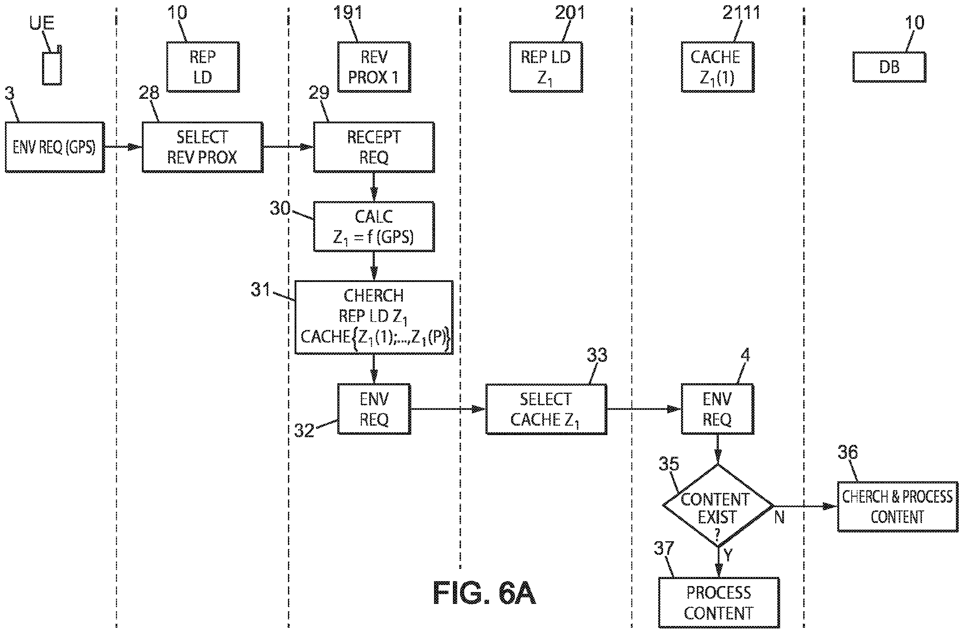

A une étape 5, la zone géographique correspondant à l'information de localisation GPS comprise dans la requête est déterminée par le système SYST. Le détail de la détermination de la zone géographique, ensuite appelée zone géographique du terminal, est donné ci-après en référence à l'étape 3 de la figure 6A. Le système SYST comprend une base de données, référencée DB (ou 10) aux figures 3 à 7, stockant, pour chaque zone géographique du territoire, une liste comprenant des indicateurs de disponibilité respectifs des réseaux, parmi tous les réseaux théoriquement disponible sur le territoire, dans ladite zone géographique.

A une étape 6, une recherche dans la base de données DB d'un réseau disponible dans la zone géographique (i ; j) déterminée à l'étape 5 est effectuée. Comme détaillé ci-après, la base de données DB peut comprendre une liste des réseaux disponibles pour chaque zone géographique du territoire, aptes à diffuser des radios dans la zone géographique. Lorsqu'au moins un réseau disponible est détecté, des données relatives audit réseau disponible détecté sont extraites de la base de données DB. On considère ci-après que trois réseaux sont détectés pour la zone (i ; j) : les réseaux FM ; DAB et 4G.

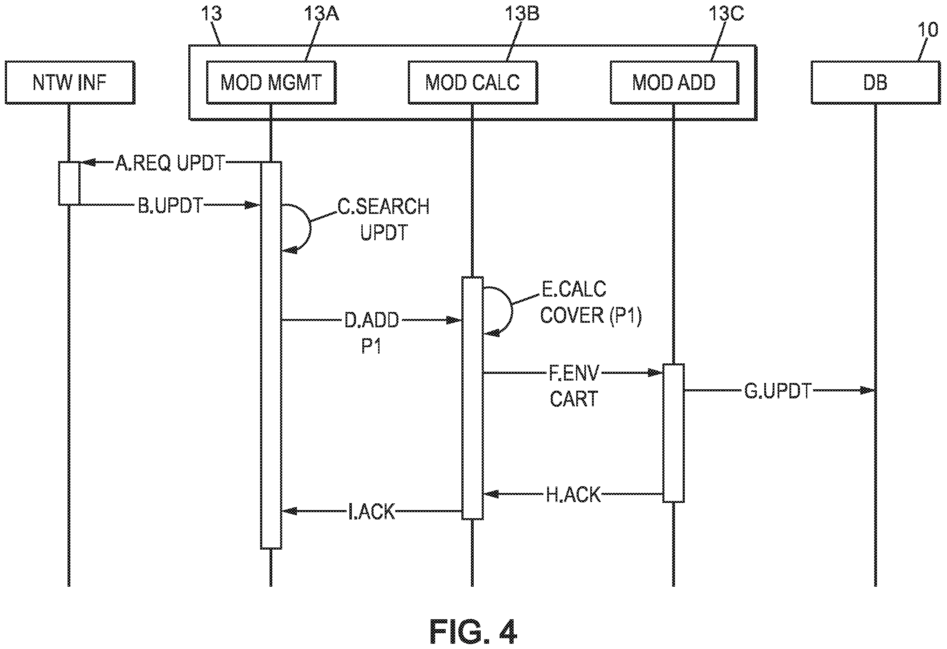

Ces données, qui sont stockées dans la base de données DB, correspondent à tout type de données en lien avec les réseaux détectés. En particulier, il peut s'agir d'un identifiant de chacun des réseaux détectés, d'un identifiant des contenus disponibles, d'un indicateur de disponibilité de chacun des réseaux détectés, d'un indicateur de qualité QoS de chacun des réseaux détectés, d'une valeur de retard inter-flux $\Delta_R$ entre chacun des réseaux détectés. Ces différents données peuvent être présentées sous forme de carte de couverture des zones géographiques, comme cela est détaillé ci-après en référence aux figures 3 et 4 Les données aurait ici par exemple pu comprendre les valeurs de $\Delta_R$(FM ; 4G) ; $\Delta_R$(FM ; DAB) ; $\Delta_R$(4G ; DAB). Le stockage et la mise à jour de ces données est expliqué ci-après en référence aux figures 3 à 6.

Un identifiant d'un contenu disponible peut-être au moins un élément parmi :

- Identifiant interne : cet identifiant est unique et correspond à un contenu pris en compte par la base de données ;

- Service Identifier ou (SId) identifie un contenu sur les réseaux DAB, DAB+, DMB et DRM :

- Programme Identification ou PI identifie un contenu sur le réseau FM-RDS

- URL : identifie un flux de streaming sur internet.

Les identifiants de chacun des réseaux détectés et/ou des contenus disponibles peuvent être utilisés par le terminal pour suivre un service en mobilité.

Une liste LIST(i ; j) des données extraites associées aux réseaux détectés pour la zone géographique (i ; j) est ensuite générée pour être transmise à l'étape 7. Elle est ensuite reçue par le terminal UE à l'étape 8.

Les données sont utilisées de diverses manières par le terminal. Dans un mode de réalisation, le terminal utilise simplement la liste des réseaux pour proposer directement à l'utilisateur une liste de radios accessibles. Cette liste de radios accessibles peut préciser avec quels réseaux les radios sont accessibles. L'utilisateur dispose ainsi directement et simplement d'une vue d'ensemble sur toutes les radios disponibles dans la zone dans laquelle il est situé.

Les indicateurs de qualités QoS peuvent être utilisés par le terminal pour paramétrer la réception des radios sur le terminal. Ces indicateurs de qualité peuvent également être présentés à l'utilisateur pour l'aider à choisir une radio.

Les valeurs de retard inter-flux $\Delta_R$(FM ; 4G) ; $\Delta_R$(FM ; DAB) et $\Delta_R$(4G ; DAB) sont utilisés pour fluidifier les transitions entre réseaux lorsqu'un premier réseau n'est plus disponible et qu'il faut utiliser un deuxième réseau pour continuer la diffusion.

Prenons l'exemple d'une rupture dans la diffusion de la radio RFM par le réseau FM. Le terminal peut alors chercher à passer sur le réseau DAB pour continuer à diffuser la radio RFM. Or, les temps de propagation des flux audio pour la radio RFM sont différents selon les réseaux ce qui a pour effet d'introduire un décalage temporel entre la radio RFM diffusé par le réseau FM et la radio RFM diffusée par le réseau DAB. Ce décalage est gênant pour l'utilisateur.

Il existe des algorithmes de resynchronisation calculant, à partir de deux signaux identiques et décalés, le décalage entre les signaux. Ces algorithmes sont bien connus et fondés sur un calcul de corrélation entre les deux signaux. De tels algorithmes ne sont toutefois pas toujours présents sur les terminaux car ils peuvent consommer des ressources de calculs et être complexes à implémenter. Dans cette situation, l'utilisateur subit le décalage lors de la transition.

De plus, même quand le terminal comprend un algorithme de resynchronisation, la mise en œuvre de la resynchronisation est largement simplifiée si le retard inter-flux est connu.

D'une part, comme le décalage n'est pas initialement connu par l'algorithme de corrélation, l'algorithme doit dimensionner des mémoires tampons, des « buffers » dont le fonctionnement est bien connu, de taille importante afin d'utiliser tout le signal audio disponible. Le coût en ressources (processeur et mémoire vive) et en complexité est donc important.

D'autre part, la mise en œuvre de la corrélation entre les deux signaux nécessite de stocker sur des buffers deux signaux (l'objet de la corrélation étant de trouver deux portions de signaux identiques et de calculer le décalage entre ces deux portions). Si le retard inter-flux est connu, il suffit de stocker sur un buffer la portion de signal décalé.

Ainsi, quand la valeur de retard inter-flux est connue du terminal, le terminal peut utiliser un unique buffer pour stocker les parties de signaux décalés.

Ainsi, l'envoi par le système d'une liste informant le terminal de tous les réseaux et de toutes les radios respectivement diffusées par ces réseaux dans la zone géographique (i ; j) résout rapidement et simplement les problèmes de transition et de facilité d'accès aux contenus. En effet, la liste peut comprendre toutes les informations requises pour rendre possible une configuration rapide et précise du terminal comme cela est expliqué ci-avant pour le retard inter-flux.

L'architecture du système SYST, selon un mode de réalisation, est maintenant décrite en référence à la **figure 3.** Ce système comprend un module de traitement 17 composé d'un système de répartition de charge 9, d'un module de calcul de retard inter-flux 11, d'un module de calcul de la qualité des réseaux 12, de la base de données 10, encore appelée base géolocalisée des services, d'un module de vérification des URL de streaming 14 et d'un module 13 d'actualisation de la base de données.

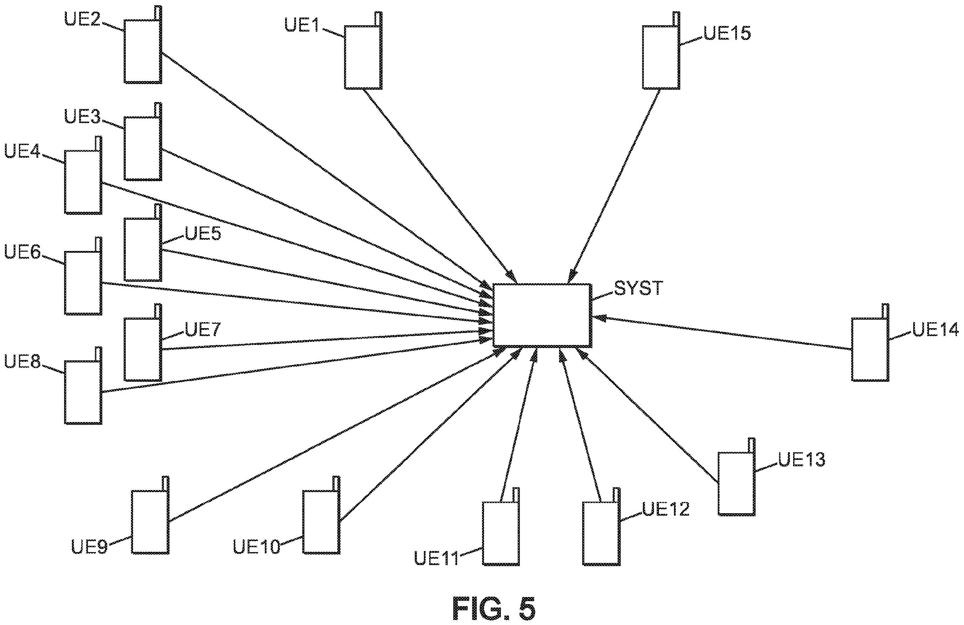

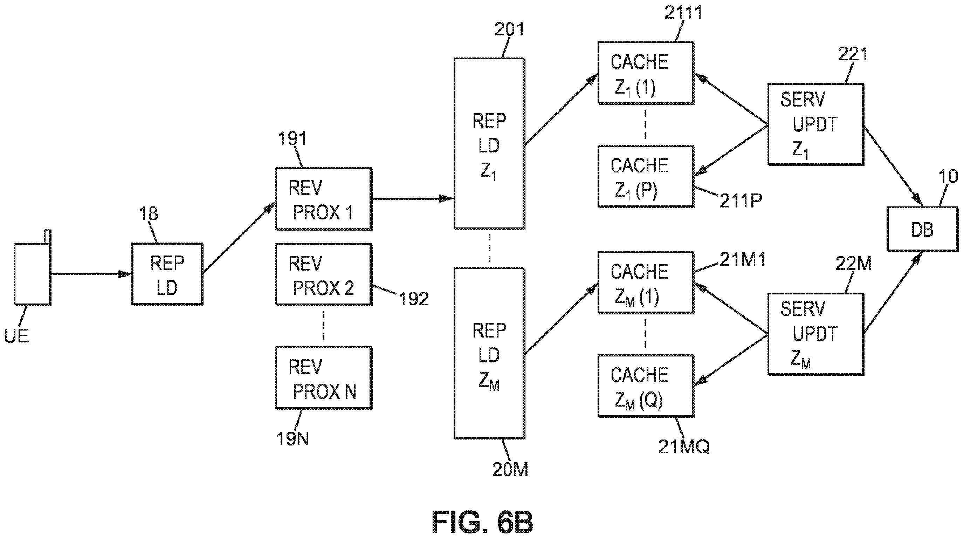

Le système de répartition de charge comporte au moins un serveur de cache et utilisé pour absorber la charge des requêtes et ainsi éviter de congestionner la base de données 10. Il est décrit plus en détail ci-après en référence aux figures 5 et 6.

Le module de calcul de retard inter-flux 11 est utilisé pour calculer une valeur de retard inter-flux pertinente entre chacun des réseaux de chacune des zones géographiques prises en compte par la base de données DB. En particulier, il analyse les valeurs de retard inter-flux reçues de tous les terminaux afin d'en déduire une valeur moyenne.

Ce module met à jour la valeur recalculée dans la base de données, par exemple cycliquement ou sur détection d'une modification importante de la valeur moyenne pour au moins une zone géographique. Il peut posséder sa propre base de données afin d'y stocker les données de retard reçues sur une profondeur temporelle configurable.

Le module de calcul de la qualité des réseaux 12 reçoit, des terminaux, les indicateurs de qualité QoS mesurés. Ce module peut également posséder sa propre base de données afin d'y stocker les indicateurs de qualité reçus des terminaux sur une profondeur temporelle configurable et ainsi de calculer une valeur moyenne de qualité. Le module met à jour la base de données DB avec les valeurs moyennes calculées, par exemple cycliquement ou sur détection d'une modification importante de la valeur moyenne pour au moins une zone géographique.

Le module de vérification des URL de streaming 14 assure la surveillance de la validité des URL utilisées pour les contenus multimédia de type streaming sur IP. Les flux disponibles via le streaming sont des flux audio et/ou vidéo accessibles via internet (et donc via les réseaux Wi-Fi, 4G, etc.), à partir d'au moins une base de données de streaming, ici représenté par le module 16. Le module 14 parcourt la liste des contenus multimédia de la base de données DB et vérifie pour chaque URL présente que le stream (contenus multimédia) est disponible, c'est-à-dire que l'URL est bien valide. Si le stream n'est pas disponible le module peut alors envoyer une notification de disfonctionnement à des terminaux prédéterminés (par exemple tous les terminaux reliés à la base de données DB). Le module 14 peut également être configuré pour supprimer les URL non valides de façon automatique si l'URL reste invalide plus d'un certain temps.

La base de données DB centralise les données et cela par zones géographiques. Comme cela est décrit ci-après en référence aux figures 5 et 6, cette base permet d'alimenter le cache des serveurs de cache. Ces données sont aussi bien mises à jour par intégration des retours des terminaux que par l'utilisation de modèles théoriques.

Le fonctionnement du module 13 d'actualisation de la base de données alimenté par au moins une base de données externe 15, encore appelée base de point de diffusion, est maintenant décrit en référence à la **figure 4**. Le module 13 comprend un module de management de l'ingestion 13A, un module de calcul des zones de couverture 13B et un module d'ingestion des zones de couverture 13C.

Le module d'ingestion des zones de couverture 13C met à jour la base de données DB en utilisant des cartes de couverture issues du module de calcul des zones de couverture 13B. Les données sont échangées entre les modules sous la forme de l'un au moins des éléments suivants :

- image BMP, pour « bitmap » en anglais, géo-localisée où chaque pixel correspond à une zone géographique et ou la valeur de la couleur du pixel donne l'information de qualité de couverture ;
- Ensemble de fichiers Shape, comprenant des données de type vectorielles pour caractériser la couverture réseau de chacune des zones géographiques.

Des métadonnées associées aux fichiers comprennent les informations mentionnées ci-avant en référence à la figure 2 qui sont stockées dans la base de données DB.

Le module de calcul de zone de couverture 13B prend en entrée les caractéristiques d'un point de diffusion (position, fréquence, type de modulation, puissance diagramme de l'antenne...) ainsi que la topographie. Il modélise en sortie une carte donnant la qualité de réception autour du point d'émission. Cette carte peut être aux formats mentionnés ci-avant en référence au module d'ingestion des zones de couverture 13C.

Le module 13B produit donc des cartes compatibles avec le format attendu en entrée du module d'ingestion des zones de couverture 13C. La production des cartes de couverture peut nécessiter l'intervention d'un opérateur.

Le module de management de l'ingestion 13A gère la mise à jour de la base de données DB à partir d'une liste de points de diffusion fourni par la base de données externe 15.

Le module 13A est interfacé avec la base de données externe 15 et doit donc gérer les différences de protocole et formats pour adapter les données avant de les envoyer au module de calcul de zone de couverture 13B

Le module de management de l'ingestion 13A peut contenir une base de données stockant les résultats des dernières requêtes effectuées. Cette base permet alors de déterminer les modifications entre les résultats à une même requête. Seuls seront traités les points de diffusion ayant évolués (ajoutés, supprimés ou modifiés). Ce module peut être remplacé par un opérateur dans le cas où le nombre de cartes à produire n'est pas suffisamment important.

Son fonctionnement est maintenant décrit en détail au procédé illustré à la figure 4, les étapes suivantes sont effectuées :

A. Le module de management 13A demande, de façon périodique ou sur action d'un opérateur, la liste des points référencés dans la base de point de diffusion 15. La requête d'obtention REQ UPDT de la liste des points de diffusion peut être adaptée afin d'obtenir la liste des points uniquement pour une radio ou une ville.

B. La base 15 retourne la liste UPDT des points de diffusion liés à la requête.

C. Le module de management 13A analyse le résultat afin d'obtenir la liste des points de diffusion ayant évolués par rapport au résultat retourné lors de la dernière exécution de cette même requête. Les évolutions sont ensuite traitées de façon synchrone ou asynchrone aux étapes suivantes.

D. Le module de management 13A envoie au module de calcul 13B les données P1 nécessaires pour produire les cartes de couverture.

E. Le module de calcul 13B produit la ou les cartes de couvertures CART.

F. Le module de calcul envoie les nouvelles cartes CART et les métadonnées associées au module d'ingestion.

G. Le module d'ingestion 13C met à jour la base de données DB en fonction des nouvelles cartes CART envoyées par le module de calcul 13B. Le processus de mise à jour est choisi en fonction du format (bmp ou shape) des cartes envoyées par le module de calcul. Le traitement d'une carte est terminé lorsque l'ensemble des éléments (pixel pour bmp ou shape) qu'elle contient a été mis à jour dans la base de données DB.

H. Le module d'ingestion 13C notifie de la fin de traitement de la carte liée au point P1.

I. Le module de calcul 13B notifie de la fin de traitement du point P1. Le module de management peut alors initier le traitement du point suivant.

Il est ici précisé que le traitement des points de diffusion peut également être réalisé de façon asynchrone. Les étapes H et I sont alors inutiles.

Il est également précisé que le présent procédé de mise à jour de la base de données DB peut être mis en œuvre indépendamment du procédé apte à informer un terminal sur la disponibilité d'au moins un réseau apte à diffuser sur le terminal un contenu multimédia à l'endroit où est localisé le terminal, décrit ci-avant notamment en référence à la figure 2.

La **figure 5** illustre un contexte d'utilisation de l'invention, selon un mode de réalisation. De nombreux terminaux UE1 à UE15 cherchent à effectuer des requêtes vers le système de traitement SYST.

Un procédé de répartition de charge utilisé pour répondre à toutes ces requêtes est maintenant décrit en référence à la **figure 6A.** Les différents dispositifs impliqués dans la mise en œuvre de ce procédé sont également décrit en référence à la **figure 6B.**

A une étape 3, le terminal UE émet la requête REQ comprenant une information GPS de localisation du terminal pour avoir accès à un contenu. Ce contenu correspond par exemple aux données LIST relatives audit réseau disponible détecté décrites ci-avant en référence aux figures 2 et 3.

Comme décrit ci-avant dans le détail en référence aux figures 2 et 3, la requête vise en particulier à obtenir un accès à un contenu dédié à la zone géographique dans laquelle est situé le terminal, dite zone géographique du terminal. Le terminal peut toutefois ignorer que le contenu auquel il souhaite avoir accès est dédié à la zone géographique du terminal et cette information (contenu dédié) peut ne pas être comprise dans la requête.

La requête peut également demander à avoir accès à un contenu dédié à la zone géographique du terminal, sans que cette zone géographique soit connue du terminal. Il faut ici bien faire la distinction entre la zone géographique du terminal et l'information de localisation du terminal. L'information de localisation du terminal correspond à une mesure objective de la localisation du terminal, telle que des coordonnées GPS, un couple latitude longitude, etc. La zone géographique du terminal est comprise sur un territoire dont le maillage en zones géographiques n'est pas nécessairement connu des terminaux. Comme cela est détaillé ci-après, l'association entre l'information de localisation du terminal et la zone géographique du terminal peut être faite au niveau d'un proxy inverse 191. En variante, le terminal peut connaitre le maillage et ainsi directement envoyer un identifiant de la zone géographique du terminal dans la requête.

Dans l'exemple de contenu correspondant aux données LIST relatives audit réseau disponible décrites ci-avant en référence aux figures 2 et 3, le contenu est dédié à la zone géographique du terminal car les données LIST décrivent des réseaux spécifiquement disponibles dans la zone géographique du terminal.

La requête est alors reçue à une étape 28 par un répartiteur de charge global 18. Le répartiteur 18 a pour fonction de choisir un proxy inverse parmi les proxys inverses 191, 192, ..., 19N (avec N un entier). La sélection du proxy peut être faite en fonction de divers critères : un choix systématique (proxy 191 par exemple) peut être appliqué, un choix en fonction de la charge de chacun des proxys, etc. Une fois la sélection du proxy inverse effectuée, la requête est transmise au proxy inverse sélectionné.

On suppose ici que le proxy inverse 191 est sélectionné, il reçoit la requête à une étape 29. A une étape 30, le proxy inverse détermine la zone géographique dans laquelle est située le terminal, appelée zone géographique du terminal. Cette zone géographique peut être déterminée à partir de l'information de localisation (mesure GPS typiquement) comprise dans la requête. Elle peut également être directement extraite de la requête si le terminal avait connaissance du maillage du territoire en zones géographiques. On utilise ensuite la référence $Z_1$ pour désigner la zone géographique du terminal.

Une fois la zone $Z_1$ déterminée, le proxy inverse 191 cherche à une étape 31 un répartiteur de charge géolocalisé 201 apte à répartir la charge entre P (P entier) serveurs de caches 2111 à 211P. On appelle deuxième pluralité de serveurs de cache les P serveurs de caches 2111 à 211P. Ces P serveurs de caches sont compris dans une première pluralité de serveurs de cache. La première pluralité de serveurs de cache correspond à tous les serveurs de cache disponibles pour le territoire (sur la figure 3 serveurs 2111 à 211P et serveurs 21M1 à 21MQ, M et Q entiers). Le répartiteur de charge géolocalisé 201 ainsi que la deuxième pluralité de serveurs de cache 2111 à 211P sont dédiés à couvrir la zone géographique $Z_1$. D'autres répartiteurs de charge géolocalisés, tels que le répartiteur 20M, couvrent d'autres zones géographiques. La requête est ensuite transmise à une étape 32 au répartiteur de charge géolocalisé 201.

Le répartiteur de charge géolocalisé 201 sélectionne ensuite, à une étape 33, un serveur de cache apte à traiter la requête. De la même manière que pour le répartiteur de charge global, cette sélection peut être effectuée en fonction de critères variés comme le critère fondé sur l'appréciation de la charge des serveurs de cache. Une fois le serveur de cache sélectionné (on suppose ici que le serveur 2111 est sélectionné), la requête est transmise puis reçue par le serveur 2111 à une étape 4.

A un test 35, il est vérifié que le contenu dont l'accès est demandé par la requête est bien disponible au niveau du serveur de cache 2111. En effet, comme expliqué ci-avant, le serveur de cache stocke préférentiellement les contenus les plus fréquemment demandés. Les requêtes orientés vers le serveur de cache 2111 étant émise depuis des terminaux situés dans la zone géographique spécifiquement couverte par le serveur de cache 2111, notamment, les probabilités que le contenu soit bien présent dans le serveur de cache sont élevées. Si le contenu est présent dans le serveur de cache 2111, la requête est traitée et le contenu envoyé par le serveur de cache 2111 à une étape 37. Si le contenu n'est pas présent, la requête est transférée à la base de données 10 qui traite la requête est envoie le contenu.

Pour chaque zone géographique parmi la pluralité de zones géographiques, un serveur de mise à jour, à partir de la base de données DB, du contenu dédié à ladite zone géographique peut être prévu. Par exemple, pour la zone géographique du terminal, le serveur de mise à jour 221 peut être prévu. Ce serveur de mise à jour utilisé pour le mise à jour de la deuxième pluralité de serveurs de cache 2111 à 211P. Les étapes suivantes sont mises en œuvre par le serveur de mise à jour 221 pour mettre à jour la deuxième pluralité de serveurs de cache 2111 à 211P :

- recherche dans la base de données DB d'au moins une modification du contenu dédié à ladite zone géographique du terminal $Z_1$ ;

- sur détection d'une modification, extraction du contenu modifié depuis la base de données DB vers le serveur de mise à jour 221 ;

- transmission à la deuxième pluralité de serveurs de cache 2111 à 211P d'une requête de mise à jour comprenant le contenu modifié.

Les étapes de mise à jour susmentionnées peuvent être mise en œuvre cycliquement ou sur réception d'une requête de mise à jour.

Il est ici précisé qu'on entend par système de répartition le système comprenant tout type de dispositif apte à effectuer la répartition des requêtes entre les serveurs de cache. En particulier, par rapport aux références de la figure 6B décrites ci-avant, le système de répartition comprend au moins un élément parmi le répartiteur de charge global 18, les proxys inverses 191, 192, ..., 19N, les répartiteurs de charge géolocalisés 201, ..., 20M, les serveurs de mise à jour 221, ..., 22M, les serveurs de cache 2111 à 211P ; ... ; 21M1 à 21MQ.

Il est ici précisé que le présent procédé de répartition de charge peut être mis en œuvre indépendamment du procédé apte à informer un terminal sur la disponibilité d'au moins un réseau apte à diffuser sur le terminal un contenu multimédia à l'endroit où est localisé le terminal, décrit ci-avant notamment en référence à la figure 2.

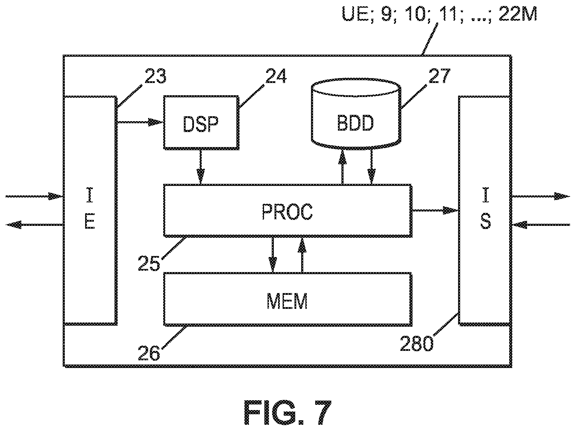

Pour effectuer les étapes susmentionnées du procédé selon l'invention, chaque dispositif UE, ..., 22M décrit ci-avant comprend au moins un microcontrôleur dont le détail est ici décrit en référence à la **figure 7.**

Ce microcontrôleur peut prendre la forme d'un boitier comprenant des circuits imprimé, de tout type d'ordinateur ou encore d'un téléphone mobile.

Le microcontrôleur comprend une mémoire vive 26 pour stocker des instructions pour la mise en œuvre par un processeur 25 des étapes du procédé décrit ci-avant en référence aux figures 2 et 3, notamment. Le microcontrôleur peut aussi comporter une mémoire de masse 27 pour le stockage de données destinées à être conservées après la mise en œuvre du procédé.

Le microcontrôleur peut en outre comporter un processeur de signal numérique (DSP) 24. Ce DSP reçoit les données de déperdition pour mettre en forme, démoduler et amplifier, de façon connue en soi ces données.

Le microcontrôleur comporte également une interface d'entrée 23 pour la réception de paramètres et données pour la mise en œuvre du procédé et une interface de sortie 280.

La présente invention ne se limite pas aux formes de réalisation décrites ci-avant à titre d'exemples ; elle s'étend à d'autres variantes.

Ainsi, on a décrit ci-avant un mode de réalisation dans lequel le contenu multimédia diffusé était une radio. Tout type de contenu multimédia comme une chaîne de télévision, un fichier texte ou des données binaires sont toutefois couverts par la présente invention.

De plus, on a décrit ci-avant un mode de réalisation dans lequel les étapes de mise à jour des serveurs de cache étaient mises en œuvre pour un procédé de répartition de charge spécifique. Ces étapes de mise à jour peuvent toutefois être mises en œuvre indépendamment de ce procédé, pour mettre à jour tout type de serveur de cache.

En outre, on a décrit ci-avant un mode de réalisation dans lequel l'information de localisation du terminal correspondait à l'endroit où le terminal était physiquement situé. Cette information de localisation du terminal peut toutefois correspondre à une localisation définie par le terminal, qui ne correspond pas physiquement à l'endroit où est localisé le terminal. Ainsi, l'information de localisation du terminal peut par exemple correspondre à une localisation choisie par le terminal et/ou l'utilisateur du terminal.

## Revendications

1. Procédé de traitement pour informer un terminal (UE) sur la disponibilité d'au moins un réseau apte à diffuser sur le terminal un contenu multimédia à l'endroit où est localisé le terminal, une pluralité prédéterminée de réseaux étant apte à diffuser le contenu multimédia, ledit contenu multimédia comprenant au moins un élément parmi :

   • des données vidéo,
   • des données d'image,
   • des données audio,
   • des données de texte,
   • un fichier vidéo,
   • un fichier audio,
   • un flux audio,
   • un flux vidéo,
   • un flux audio d'une station de radio,
   • un flux vidéo d'une chaîne de télévision,
   • une image, et
   • des données de mouvement,

   le terminal étant relié à un système (SYST) comprenant une base de données (DB) stockant, pour chaque zone géographique parmi une pluralité de zones géographiques, une liste comprenant des indicateurs de disponibilité respectifs des réseaux de la pluralité prédéterminée de réseaux dans ladite zone géographique,
   le procédé comprenant les étapes suivantes:

   - mesure (1) par le terminal d'au moins un indicateur de retard inter-réseaux (ΔR) comprenant une valeur de retard dans la diffusion du contenu multimédia entre un premier réseau de la pluralité prédéterminée de réseaux et un deuxième réseau de la pluralité prédéterminée de réseaux ;
   - transmission (3) dudit au moins un indicateur de retard inter-réseaux du terminal vers le système ;

le procédé comprenant en outre les étapes suivantes, mises en œuvre dans le système :

   - stockage dudit au moins un indicateur de retard inter-réseaux du terminal dans le système ;
   - -réception (4) d'une requête (REQ) d'information sur la disponibilité dudit contenu multimédia, émise par le terminal, la requête comprenant une information de localisation du terminal ;
   - recherche (6) dans la base de données d'au moins un réseau parmi la pluralité prédéterminée de réseaux qui est disponible dans une zone géographique, dite zone géographique du terminal, dans laquelle le terminal est localisé ;
   - sur détection de réseaux disponibles, transmission (7) au terminal de données (LIST) relatives auxdits réseaux disponibles détectés,

le procédé comprenant en outre, l'envoi, en provenance du système à destination du terminal, de valeurs de retard inter-flux entre chacun des réseaux détectés stockées dans le système, et l'utilisation par le terminal d'une valeur de retard inter-flux entre un premier réseau détecté et un deuxième réseau détecté reçue pour fluidifier une transition entre lesdits premier et deuxième réseaux détectés, lorsque le premier réseau détecté n'est plus disponible et le terminal doit utiliser le deuxième réseau détecté pour continuer la diffusion dudit contenu multimédia, la valeur de retard inter-flux entre lesdits premier et second réseaux détectés étant utilisée pour déterminer une portion de signal décalé dudit contenu multimédia, ladite portion de signal décalé étant ensuite stockée dans une mémoire tampon du terminal.

2. Procédé selon la revendication 1, le procédé comportant en outre les étapes de :

   - mesure (1) par le terminal d'au moins un indicateur de qualité (QoS) d'au moins un réseau parmi la pluralité prédéterminée de réseaux ;
   - transmission (3) dudit indicateur de qualité du terminal vers le système ;
   - stockage dudit indicateur de qualité dans le système.

3. Procédé selon la revendication 2, dans lequel l'étape de mesure de l'indicateur de qualité est effectuée avant l'étape de réception par le système de la requête d'information sur la disponibilité du contenu multimédia, et

dans lequel la transmission de l'indicateur de qualité est faite avec la transmission de la requête d'information sur la disponibilité du contenu multimédia, en intégrant l'indicateur de qualité dans la requête d'information sur la disponibilité du contenu multimédia.

**4.** Procédé selon la revendication 3, dans lequel le système comprenant la base de données stocke, pour chaque zone géographique parmi une pluralité de zones géographiques, une liste comprenant des indicateurs de qualité respectifs des réseaux de la pluralité prédéterminée de réseaux dans ladite zone géographique,

le procédé comportant en outre les étapes de :

- association de l'indicateur de qualité avec l'information de localisation du terminal pour déterminer la zone géographique parmi la pluralité de zones géographiques dans laquelle l'indicateur de qualité a été mesurée ;
- stockage dans le système de l'indicateur de qualité pour la zone géographique déterminée.

**5.** Procédé selon l'une des revendications 2 à 4, dans lequel l'indicateur de qualité du réseau mesuré comprend au moins un élément parmi :

- un indicateur de disponibilité dudit réseau mesuré ;
- un retard lié à la transmission, via le réseau mesuré, de données de diffusion du contenu multimédia ;
- un rapport de signal sur bruit lié à la transmission, via le réseau mesuré, de données de diffusion du contenu multimédia ;
- une puissance d'un signal lié à la transmission, via le réseau mesuré, de données de diffusion du contenu multimédia ;
- un taux erreur binaire d'un signal lié à la transmission, via le réseau mesuré, de données de diffusion du contenu multimédia.

**6.** Procédé selon l'une des revendications précédentes, dans lequel l'étape de mesure de l'indicateur de retard inter-réseaux est effectuée après réception par le terminal des données relatives à la pluralité de réseaux détectés, si le premier et le deuxième réseau ont été détectés dans la base de données comme étant disponibles dans la zone géographique du terminal.

**7.** Système (SYST) de traitement, le système étant apte à informer un terminal (UE) sur la disponibilité d'au moins un réseau apte à diffuser sur le terminal un contenu multimédia à l'endroit où est localisé le terminal, une pluralité prédéterminée de réseaux étant apte à diffuser le contenu multimédia, ledit contenu multimédia comprenant au moins un élément parmi :

- des données vidéo,
- des données d'image,
- des données audio,
- des données de texte,
- un fichier vidéo,
- un fichier audio,
- un flux audio,
- un flux vidéo,
- un flux audio d'une station de radio,
- un flux vidéo d'une chaîne de télévision,
- une image, et
- des données de mouvement,

le système comprenant :

- une base de données (DB) agencée pour stocker pour chaque zone géographique parmi une pluralité de zones géographiques, une liste comprenant des indicateurs de disponibilité respectifs des réseaux de la pluralité prédéterminée de réseaux dans ladite zone géographique,
- un processeur (25) agencé pour effectuer:

• la réception d'au moins un indicateur de retard (ΔR) inter-réseaux du terminal comprenant une valeur de retard dans la diffusion du contenu multimédia entre un premier réseau de la pluralité prédéterminée de réseaux et un deuxième réseau de la pluralité prédéterminée de réseaux ;
• le stockage dudit au moins un indicateur de retard inter-réseaux du terminal,
• la réception d'une requête d'information sur la disponibilité du contenu multimédia, émise par le terminal, la requête comprenant une information de localisation du terminal ;
• la recherche dans la base de données d'au moins un réseau parmi la pluralité prédéterminée de réseaux qui est disponible dans une zone géographique, dite zone géographique du terminal, dans laquelle le terminal est localisé ;

sur détection de réseaux disponibles, la transmission au terminal de données relatives auxdits réseaux disponibles détectés ; le système étant agencé pour envoyer au terminal des valeurs de retard inter-flux entre chacun des réseaux détectés stockées dans le système, pour une utilisation par le terminal d'une valeur de retard inter-flux entre un premier réseau détecté et un deuxième réseau détecté reçue pour fluidifier une transition entre lesdits premier et deuxième réseaux détectés, lorsque le premier réseau détecté n'est plus disponible et le terminal doit utiliser le deuxième réseau détecté pour continuer la diffusion dudit contenu multimédia,

8. Système selon la revendication 7, comprenant en outre un module de stockage, pour chaque zone géographique parmi une pluralité de zones géographiques, d'une liste comprenant des indicateurs de qualité respectifs des réseaux de la pluralité prédéterminée de réseaux dans ladite zone géographique.

9. Terminal (UE) apte à communiquer avec le système selon la revendication 8, le terminal comportant :

- un dispositif de mesure d'au moins un indicateur de qualité d'au moins un réseau parmi une pluralité prédéterminée de réseaux étant apte à diffuser un contenu multimédia
- un transmetteur pour la transmission dudit indicateur de qualité du terminal vers le système ; ledit terminal étant apte en outre pour :
- mesurer au moins un indicateur de retard inter-réseaux (ΔR) comprenant une valeur de retard dans la diffusion du contenu multimédia entre un premier réseau de la pluralité prédéterminée de réseaux et un deuxième réseau de la pluralité prédéterminée de réseaux ;
- transmettre ledit au moins indicateur de retard inter-réseaux au système,

le terminal étant en outre apte à :

- envoyer au système une requête d'information sur la disponibilité dudit contenu multimédia, la requête comprenant une information de localisation du terminal;
- recevoir dudit système des données relatives aux réseaux disponibles détectés dans une zone géographique, dite zone géographique du terminal;
- recevoir, en provenance du système, des valeurs de retard inter-flux entre chacun des réseaux détectés stockées dans le système, et utiliser une valeur de retard inter-flux entre un premier réseau détecté et un deuxième réseau détecté reçue pour fluidifier une transition entre lesdits premier et deuxième réseaux détectés, lorsque le premier réseau détecté n'est plus disponible et le terminal doit utiliser le deuxième réseau détecté pour continuer la diffusion dudit contenu multimédia, le terminal comprenant une mémoire tampon apte à stocker une portion de signal décalé dudit contenu multimédia, déterminée en utilisant la valeur de retard inter-flux entre lesdits premier et second réseaux détectés reçue.

**Patentansprüche**

1. Verarbeitungsverfahren, um ein Endgerät (UE) über die Verfügbarkeit mindestens eines Netzwerks zu informieren, das zum Verbreiten von einem Multimedia-Inhalt über das Endgerät an dem Ort, an dem sich das Endgerät befindet, geeignet ist, wobei eine vorbestimmte Mehrzahl von Netzwerken dazu in der Lage sind, den Multimedia-Inhalt zu verbreiten, wobei der Multimedia-Inhalt wenigstens ein Element umfasst aus:

   • Videodaten,
   • Bilddaten,
   • Audiotaten,
   • Textdaten,
   • einer Videodatei,
   • einer Audiodatei,
   • einem Audio-Stream,
   • einem Video-Stream,
   • einem Audio-Stream einer Radiostation,
   • einem Video-Stream eines Fernsehsenders,
   • einem Bild, und
   • Bewegungsdaten,

   wobei das Endgerät mit einem System (SYST) verbunden ist, das eine Datenbank (DB) umfasst, die für jedes geografische Gebiet aus einer Mehrzahl von geografischen Gebieten eine Liste mit jeweiligen Indikatoren für die Verfügbarkeit der Netzwerke aus der vorbestimmten Mehrzahl von Netzwerken in dem geografischen Gebiet speichert, wobei das Verfahren die folgenden Schritte umfasst:

   - Messung (1), durch das Endgerät, von mindestens einem netzwerkübergreifenden Verzögerungsindikator (ΔR), der einen Verzögerungswert für das Verbreiten des Multimedia-Inhalts zwischen einem ersten Netzwerk aus der vorbestimmten Mehrzahl von Netzwerken und einem zweiten Netzwerk aus der vorbestimmten Mehrzahl von Netzwerken umfasst;
   - Übertragung (3) des wenigstens einen netzwerkübergreifenden Verzögerungsindikators vom Endgerät zum System;

   wobei das Verfahren weiter die folgenden Schritte umfasst, die im System ausgeführt werden:

   - Speichern des wenigstens einen netzwerkübergreifenden Verzögerungsindikators des Endgeräts im System,
   - Empfang (4) einer vom Endgerät gesendeten Anfrage (REQ) nach Informationen über die Verfügbarkeit des Multimedia-Inhalts, wobei die Anfrage Informationen über den Standort des Endgeräts enthält;
- Suche (6) in der Datenbank nach mindestens einem Netzwerk aus der vorbestimmten Mehrzahl von Netzwerken, das in einem geografischen Gebiet verfügbar ist, in dem sich das Endgerät befindet, und das als geografisches Gebiet des Endgeräts bezeichnet wird;
- bei Erkennung von verfügbaren Netzwerken, Übertragung (7) von Daten (LIST), die sich auf die erkannten verfügbaren Netzwerke beziehen, an das Endgerät, wobei das Verfahren weiter umfasst:

das Senden von Stream-übergreifenden Verzögerungswerten zwischen jedem der im System gespeicherten erfassten Netzwerke vom System an das Endgerät,
und die Verwendung, durch das Endgerät, von einem Stream-übergreifenden Verzögerungswert zwischen einem ersten erfassten Netzwerk und einem zweiten erfassten Netzwerk, welcher empfangen wird, um einen Übergang zwischen dem ersten und zweiten erfassten Netzwerk flüssiger zu gestalten, wenn das erste erfasste Netzwerk nicht mehr verfügbar ist und das Endgerät das zweite erfasste Netzwerk nutzen muss, um die Verbreitung des Multimedia-Inhalts fortzusetzen,
wobei der Stream-übergreifende Verzögerungswert zwischen dem ersten und zweiten erfassten Netzwerk genutzt wird, um einen Offset-Signalabschnitt des Multimedia-Inhalts zu bestimmen, wobei der Offset-Signalabschnitt anschließend in einem Zwischenspeicher des Endgeräts gespeichert wird.

2. Verfahren nach Anspruch 1, wobei das Verfahren ferner die Schritte umfasst:

- Messung (1), durch das Endgerät, von mindestens einem Qualitätsindikator (QoS) von mindestens einem Netzwerk aus der vorbestimmten Mehrzahl von Netzwerken;
- Übertragung (3) des Qualitätsindikators vom Endgerät zum System;
- Speicherung des Qualitätsindikators im System.

3. Verfahren nach Anspruch 2, wobei der Schritt des Messens des Qualitätsindikators vor dem Schritt des Empfangs der Anfrage nach Informationen über die Verfügbarkeit des Multimedia-Inhalts durch das System durchgeführt wird, und
wobei die Übertragung des Qualitätsindikators mit der Übertragung der Anfrage nach Informationen über die Verfügbarkeit des Multimedia-Inhalts erfolgt, indem der Qualitätsindikator in die Anfrage nach Informationen über die Verfügbarkeit des Multimedia-Inhalts integriert wird.

4. Verfahren nach Anspruch 3, wobei das System, das die Datenbank umfasst, für jedes geografische Gebiet aus einer Mehrzahl von geografischen Gebieten eine Liste mit jeweiligen Qualitätsindikatoren für die Netzwerke aus der vorbestimmten Mehrzahl von Netzwerken in dem geografischen Gebiet speichert, wobei das Verfahren ferner die Schritte umfasst:

- Zuordnung des Qualitätsindikators zu den Standort-Informationen des Endgeräts zur Bestimmung des geografischen Gebiets aus der Mehrzahl von geografischen Gebieten, in dem der Qualitätsindikator gemessen wurde;
- Speicherung des Qualitätsindikators für das bestimmte geografische Gebiet im System.

5. Verfahren nach einem der Ansprüche 2 bis 4, wobei der gemessene Qualitätsindikator des Netzwerks mindestens ein Element umfasst aus:

• einem Indikator für die Verfügbarkeit des vermessenen Netzwerks;
• einer Verzögerung, die mit der Übertragung von Daten zur Verbreitung des Multimedia-Inhalts über das vermessene Netzwerk verbunden ist;
• einem Signal-Rausch-Verhältnis, das mit der Übertragung von Daten zur Verbreitung des Multimedia-Inhalts über das vermessene Netzwerk verbunden ist;
• einer Leistung eines Signals, das mit der Übertragung von Daten zur Verbreitung des Multimedia-Inhalts über das vermessene Netzwerk verbunden ist;
• einer binären Fehlerrate eines Signals, das mit der Übertragung von Daten zur Verbreitung des Multimedia-Inhalts über das vermessene Netzwerk verbunden ist.

6. Verfahren nach einem der vorhergehenden Ansprüche, wobei der Schritt des Messens des netzwerkübergreifenden Verzögerungsindikators nach dem Empfang von Daten durch das Endgerät ausgeführt wird, die sich auf die Mehrzahl von erfassten Netzwerken beziehen, wenn das erste und das zweite Netzwerk in der Datenbank als im geografischen Gebiet des Endgeräts verfügbar erkannt wurden.

7. Verarbeitungssystem (SYST), wobei das System dazu geeignet ist, ein Endgerät (UE) über die Verfügbarkeit mindestens eines Netzwerks zu informieren, welches dazu in der Lage ist, einen Multimedia-Inhalt über das Endgerät an dem Ort zu verbreiten, an dem sich das Endgerät befindet, wobei eine vorbestimmte Mehrzahl von Netzwerken dazu in der Lage sind, den Multimedia-Inhalt zu verbreiten, wobei der Multimedia-Inhalt wenigstens ein Element umfasst aus:

- Videodaten,
- Bilddaten,
- Audiotaten,
- Textdaten,
- einer Videodatei,
- einer Audiodatei,
- einem Audio-Stream,
- einem Video-Stream,
- einem Audio-Stream einer Radiostation,
- einem Video-Stream eines Fernsehsenders,
- einem Bild, und
- Bewegungsdaten,

wobei das System umfasst:

- eine Datenbank (DB), die dazu eingerichtet ist, für jedes geografische Gebiet aus einer Mehrzahl von geografischen Gebieten eine Liste mit jeweiligen Indikatoren über die Verfügbarkeit der Netzwerke aus der vorbestimmten Mehrzahl von Netzwerken in dem geographischen Gebiet zu speichern,

- einen Prozessor (25), der dazu eingerichtet ist, die folgenden Schritte auszuführen:

• Empfang von wenigstens einem netzwerkübergreifenden Verzögerungsindikator (ΔR) des Endgeräts, umfassend einen Verzögerungswert für die Verbreitung des Multimedia-Inhalts zwischen einem ersten Netzwerk aus der vorbestimmten Mehrzahl von Netzwerken und einem zweiten Netzwerk aus der vorbestimmten Mehrzahl von Netzwerken umfasst;

• das Speichern des wenigstens eines netzwerkübergreifenden Verzögerungsindikators des Endgeräts,

• den Empfang einer vom Endgerät gesendeten Anfrage nach Informationen über die Verfügbarkeit des Multimedia-Inhalts, wobei die Anfrage Informationen über den Standort des Endgeräts umfasst;

• die Suche in der Datenbank nach mindestens einem Netzwerk aus der vorgegebenen Mehrzahl von Netzwerken, das in einem geografischen Gebiet verfügbar ist, in dem sich das Endgerät befindet, und das als geografisches Gebiet des Endgeräts bezeichnet wird;

• bei Erkennung von verfügbaren Netzwerken, die Übertragung von Daten, die sich auf die erfassten verfügbaren Netzwerke beziehen, an das Endgerät,

wobei das System dazu eingerichtet ist, Stream-übergreifende Verzögerungswerte zwischen jedem der im System gespeicherten erfassten Netzwerke an das Endgerät zu senden,

für eine Verwendung, durch das Endgerät, von einem Stream-übergreifenden Verzögerungswert zwischen einem ersten erfassten Netzwerk und einem zweiten erfassten Netzwerk, welcher empfangen wird, um einen Übergang zwischen dem ersten und zweiten erfassten Netzwerk flüssiger zu gestalten, wenn das erste erfasste Netzwerk nicht mehr verfügbar ist und das Endgerät das zweite erfasste Netzwerk nutzen muss, um die Verbreitung des Multimedia-Inhalts fortzusetzen.

8. System nach Anspruch 7, ferner umfassend ein Modul, um für jedes geografische Gebiet aus einer Mehrzahl von geografischen Gebieten, eine Liste mit jeweiligen Qualitätsindikatoren der Netzwerke aus der vorbestimmten Mehrzahl von Netzwerken in dem geografischen Gebiet zu speichern.

9. Endgerät (UE), das dazu in der Lage ist, mit dem System gemäß Anspruch 8 zu kommunizieren, wobei das Endgerät umfasst:

- eine Vorrichtung zum Messen mindestens eines Qualitätsindikators von mindestens einem Netzwerk aus einer vorbestimmten Mehrzahl von Netzwerken, welches dazu in der Lage ist, einen Multimedia-Inhalt zu verbreiten;

- einen Sender zum Übertragen des Qualitätsindikators vom Endgerät zum System,

wobei das Endgerät ferner dazu in der Lage ist:

- wenigstens einen netzwerkübergreifenden Verzögerungsindikator (ΔR) zu messen, der einen Verzögerungswert für die Verbreitung des Multimedia-Inhalts zwischen einem ersten Netzwerk aus der vorbestimmten Mehrzahl von Netzwerken und einem zweiten Netzwerk aus der vorbestimmten Mehrzahl von Netzwerken umfasst;
- den wenigstens einen netzwerkübergreifenden Verzögerungsindikator an das System zu übertragen,

wobei das Endgerät weiter auch dazu in der Lage ist:

- an das System eine Anfrage nach Informationen über die Verfügbarkeit des Multimedia-Inhalts zu senden, wobei die Anfrage Informationen über den Standort des Endgeräts enthält;
- vom System Daten zu empfangen, die sich auf die verfügbaren Netzwerke beziehen, die in einem geographischen Gebiet erfasst wurden, das als geografisches Gebiet des Endgeräts bezeichnet wird,
- vom System kommend Stream-übergreifende Verzögerungswerte zwischen allen im System gespeicherten erfassten Netzwerken zu empfangen, und einen Stream-übergreifenden Verzögerungswert zwischen einem ersten erfassten Netzwerk und einem zweiten erfassten Netzwerk, welcher empfangen wird, zu verwenden um einen Übergang zwischen dem ersten und zweiten erfassten Netzwerk flüssiger zu gestalten, wenn das erste erfasste Netzwerk nicht mehr verfügbar ist und das Endgerät das zweite erfasste Netzwerk nutzen muss, um die Verbreitung des Multimedia-Inhalts fortzusetzen,
wobei das Endgerät einen Zwischenspeicher umfasst, der dazu geeignet ist, einen Offset-Signalabschnitt des Multimedia-Inhalts zu speichern, der unter Verwendung des empfangenen Stream-übergreifenden Verzögerungswerts zwischen dem ersten und zweiten erfassten Netzwerk bestimmt wurde.

## Claims

1. Processing method for informing a terminal (UE) on the availability of at least one network capable of broadcasting multimedia content on the terminal at the location where the terminal is located, a predetermined plurality of networks being capable of broadcasting the multimedia content, said multimedia content comprising at least one element from:

   • video data,
   • image data,
   • audio data,
   • text data,
   • a video file,

• an audio file,
• an audio stream,
• a video stream,
• an audio stream from a radio station,
• a video stream from a television channel,
• an image, and
• movement data,
the terminal being connected to a system (SYST) comprising a database (DB) storing, for each geographic area among a plurality of geographic areas, a list comprising respective availability indicators of the networks of the predetermined plurality of networks in said geographic area,
the method comprising the following steps:

- measuring (1) by the terminal at least one inter-network delay indicator ($\Delta R$) comprising a value of delay in the broadcasting of the multimedia content between a first network of the predetermined plurality of networks and a second network of the predetermined plurality of networks;
- transmitting (3) said at least one inter-network delay indicator from the terminal to the system;

the method further comprising the following steps, implemented in the system:

- storing said at least one inter-network delay indicator of the terminal in the system;
- receiving (4) an information request (REQ) on the availability of said multimedia content, emitted by the terminal, the request comprising information on the location of the terminal;
- searching (6) in the database for at least one network among the predetermined plurality of networks which is available in a geographic area, called geographic area of the terminal, wherein the terminal is located;
- upon detection of available networks, transmitting (7) data (LIST) relating to said detected available networks to the terminal, the method further comprising sending, from the system to the terminal, inter-stream delay values between each of the detected networks stored in the system and using a received inter-stream delay value, by the terminal, between a first detected network and a second detected network to smooth a transition between said first and second detected networks, when the first detected network is no longer available and the terminal must use the second detected network to continue broadcasting said multimedia content, the inter-stream delay value between said first and second detected networks being used to determine a shifted signal portion of said multimedia content, said shifted signal portion then being stored in a buffer memory of the terminal.

2. Method according to claim 1, the method further including the steps of:

- measuring (1) by the terminal at least one quality indicator (QoS) of at least one network among the predetermined plurality of networks;
- transmitting (3) said quality indicator from the terminal to the system;
- storing said quality indicator in the system.

3. Method according to claim 2, wherein the step of measuring the quality indicator is carried out before the step of receiving the information request on the availability of the multimedia content by the system, and wherein the transmission of the quality indicator is made with the transmission of the information request on the availability of the multimedia content, by integrating the quality indicator in the information request on the availability of the multimedia content.

4. Method according to claim 3, wherein the system comprising the database stores, for each geographic area among a plurality of geographic areas, a list comprising respective quality indicators of the networks of the predetermined plurality of networks in said geographic area, the method further including the steps of:

- associating the quality indicator with the location information of the terminal to determine the geographic area among the plurality of geographic areas wherein the quality indicator was measured;
- storing the quality indicator for the determined geographic area in the system.

5. Method according to one of claims 2 to 4, wherein the measured network quality indicator comprises at least one element from:

- an indicator of availability of said measured network;
- a delay linked to the transmission, via the measured network, of broadcasting data of the multimedia content;
- a signal-to-noise ratio linked to the transmission, via the measured network, of broadcasting data of the multimedia content;
- a signal strength linked to the transmission, via the measured network, of broadcasting data of the multimedia content;
- a binary error rate of a signal linked to the transmission, via the measured network, of broadcasting data of the multimedia content.

6. Method according to one of the preceding claims, wherein the step of measuring the inter-network delay indicator is carried out after receiving, by the terminal, data relating to the plurality of detected networks, if the first and the second network were detected in the database as being available in the geographic area of the terminal.

7. Processing system (SYST), the system being capable of informing a terminal (UE) on the availability of at least one network capable of broadcasting multimedia content on the terminal at the location where the terminal is located, a predetermined plurality of networks being capable of broadcasting the multimedia content, said multimedia content comprising at least one element from:

- video data,
- image data,
- audio data,
- text data,
- a video file,
- an audio file,
- an audio stream,
- a video stream,
- an audio stream from a radio station,
- a video stream from a television channel,
- an image, and
- movement data,
the system comprising:

- a database (DB) arranged to store for each geographic area among a plurality of geographic areas, a list comprising respective availability indicators of the networks of the predetermined plurality of networks in said geographic area,
- a processor (25) arranged to perform:

- the reception of at least one inter-network delay indicator ($\Delta R$) of the terminal comprising a delay value in the broadcasting of the multimedia content between a first network of the predetermined plurality of networks and a second network of the predetermined plurality of networks;
- the storage of said at least one inter-network delay indicator of the terminal,
- the reception of an information request on the availability of the multimedia content, emitted by the terminal, the request comprising information on the location of the terminal;
- the search in the database for at least one network among the predetermined plurality of networks which is available in a geographic area, called geographic area of the terminal, wherein the terminal is located;

upon detection of available networks, the transmission to the terminal of data relating to said detected available networks;

the system being arranged to send to the terminal inter-stream delay values between each of the detected networks stored in the system, for a use of a received inter-stream delay value, by the terminal, between a first detected network and a second detected network to smooth a transition between said first and second detected networks, when the first detected network is no longer available and the terminal must use the second detected network to continue broadcasting said multimedia content,

8. System according to claim 7, further comprising a module for storing, for each geographic area among a plurality of geographic areas, a list comprising respective quality indicators of the networks of the predetermined plurality of networks in said geographic area.

9. Terminal (UE) capable of communicating with the system according to claim 8, the terminal including:

- a device for measuring at least one quality indicator of at least one network from a predetermined plurality of networks being capable of broadcasting multimedia content;
- a transmitter for transmitting said quality indicator from the terminal to the system; said terminal being further capable of:
- measuring at least one inter-network delay indicator ($\Delta R$) comprising a value of delay in the broadcasting of the multimedia content between a first network of the predetermined plurality of networks and a second network of the predetermined plurality of networks;
- transmitting said at least one inter-network delay indicator to the system,

the terminal being further capable of:

- sending an information request on the availability of said multimedia content to the system, the request comprising information on the location of the terminal;
- receiving from said system data relating to the available networks detected in a geographic area, called geographic area of the terminal;

receiving, from the system, inter-stream delay values between each of the detected networks stored in the system, and using a received inter-stream delay value between a first detected network and a second detected network to smooth a transition between said first and second detected networks, when the first detected network is no longer available and the terminal must use the second detected network to continue broadcasting said multimedia content,

the terminal comprising a buffer memory capable of storing a shifted signal portion of said multimedia content, determined using the received inter-stream delay value between said first and second detected networks.

FIG. 1

EP 3 391 622 B1

UE                                    SYST

1 — CAPT
    -Qos
    -$\Delta_R$
    -GPS

2 — GEN
      REQ

3 — ENV        REQ (GPS)        REC — 4
      REQ                        REQ

                                DET — 5
                              $(i;j) = f(GPS)$

                                FIND — 6
                               LIST $(i;j)$

8 — REC        LIST $(i;j)$     SEND — 7
   LIST $(i;j)$                LIST $(i;j)$

# FIG. 2

**FIG. 3**

**FIG. 4**

EP 3 391 622 B1

FIG. 5

FIG. 6A

UE — ENV REQ (GPS) [3]

REP LD [10] — SELECT REV PROX [28]

REV PROX 1 [191] — RECEPT REQ [29] — CALC $Z_1 = f\,(GPS)$ [30] — CHERCH REP LD $Z_1$ CACHE $\{Z_1(1);...;Z_1(P)\}$ [31] — ENV REQ [32]

REP LD $Z_1$ [201]

CACHE $Z_1(1)$ [2111]

DB [10]

SELECT CACHE $Z_1$ [33] — ENV REQ [4]

CONTENT EXIST ? [35]
— N → CHERCH & PROCESS CONTENT [36]
— Y → PROCESS CONTENT [37]

24

FIG. 6B

UE; 9; 10; 11; ...; 22M

**FIG. 7**

## RÉFÉRENCES CITÉES DANS LA DESCRIPTION

**Documents brevets cités dans la description**

- US 2012040605 A1
- US 2015288990 A1